# EUROPÄISCHE PATENTSCHRIFT

(11) **EP 1 362 330 B1**
(45) Veröffentlichungstag und Bekanntmachung des Hinweises auf die Patenterteilung: **07.05.2008**
(21) Anmeldenummer: 02712816.4
(22) Anmeldetag: 14.01.2002
(51) Int. Cl.: G07B 15/02

(54) **VERFAHREN ZUR REGISTRIERUNG VON BILLETTEN**
METHOD FOR REGISTERING TICKETS
PROCEDE D'ENREGISTREMENT DE BILLETS

(30) Priorität: 21.02.2001 EP 01104119
(43) Veröffentlichungstag der Anmeldung: 19.11.2003
(73) Patentinhaber: Siemens VDO Automotive AG, 9212 Neuhausen (CH)
(72) Erfinder: LAUPER, Alfred, CH-8047 Zürich (CH); BÄCHTIGER, Rolf, CH-8966 Oberwil-Lieli (CH)
(74) Vertreter: Kley, Hansjörg
(86) Internationale Anmeldenummer: PCT/EP2002/000288
(87) Internationale Veröffentlichungsnummer: WO 2002/086823

(56) Entgegenhaltungen:
- EP-A- 0 465 456
- EP-A- 1 065 625
- WO-A-00/67208
- GB-A- 2 246 896
- GB-A- 2 267 626
- US-A- 5 914 671

## Beschreibung

Die vorliegende Erfindung betrifft ein Verfahren nach dem Oberbegriff des Patentanspruchs 1.

Eine Registrierung von Fahrgästen, die beim Einsteigen in ein Verkehrsmittel ein Billett in oder an ein Erfassungsgerät führen müssen, reduziert den Durchsatz erheblich und führt zu unnötig langen Aufenthaltsdauern. Der Nachteil solcher "Check-In / Check-Out" - Verfahren wird durch sogenannte "Walk-In / Walk-Out" Verfahren behoben. Die Registrierung erfolgt entweder beim Einsteigen und/oder Aussteigen wie auch fallweise während der Fahrt, ohne dass der Fahrgast mit seinem Billett eine Aktion vornehmen muss.

In EP 1065625 A1 ist ein Verfahren zur Detektion von Objekten mittels einem Transponder offenbart, bei dem vorzugsweise im Frequenzbereich in der Grössenordnung 127 kHz beim Eintritt in eine Erfassungszone eine erste Informationseinheit an den Transponder übermittelt wird. Aufgrund der in der ersten Informationseinheiten enthaltenen Information wird ein auf dem Transponder vorhandenes Sendemodul unmittelbar oder verzögert aktiviert, um eine zweite Informationseinheit an eine in der Erfassungszone befindliche Empfangseinheit wenigstens einmal zu übermitteln. Damit wird feststellbar gemacht, dass sich das dem Transponder zugeordnete Objekt in dieser Erfassungszone aufgehalten hat. Die Uebermittlung der zweiten Informationseinheit erfolgt vorzugsweise im Bereich von einigen 100 MHz.

In der internationalen Patentanmeldung PCT/EP00/08292 wird ein Verfahren und ein System zur Registrierung von Billetten angegeben, bei dem vorzugsweise in einem Frequenzbereich von 13.5 MHz eine erste Informationseinheit beim Eintritt in eine Erfassungszone an ein elektronisches Billett übermittelt wird. Mit einer in dieser Informationseinheit enthaltenen Information wird ein auf dem Billett vorhandenes Empfangsmodul periodisch aktiv geschaltet und von einer der Erfassungszone zugeordneten Sende-/Empfangseinheit eine bidirektionale Kommunikation aufgebaut und die jeweilige Anwesenheit des Billettes als Billettrecord registriert. Die aufgebaute bidirektionale Kommunikation erfolgt vorzugsweise im Frequenzbereich von 868 MHz.

Die Registrierung von elektronischen Billetten sollte folgende Bedingungen erfüllen:
a) Die Registrierung muss lückenlos erfolgen, so sollen die in einer Manteltasche befindlichen Billette eines Vaters und jene der mitreisenden Kinder erfasst werden.
b) Es darf keine ungewollte Registrierung erfolgen, beispielsweise wenn eine Person mit einem solchen elektronischen Billett einer weiteren Person beim Einsteigen hilft, darf diese weitere Person nicht als kostenpflichtiger Passagier registriert werden.
c) Die Registrierung muss möglichst betrugssicher sein, so soll das Abdecken des elektronischen Billetts mittels einer metallischen Folie erkannt werden.
d) Die auf dem Billett notwendigerweise vorhandenen Energiequellen sollen eine möglichst hohe Betriebsbereitschaft des Billettes ermöglichen.

Die Anforderung d) führt zu einer in beiden vorgenannten Schriften angegebenen intermittierenden Betriebsweise. Entweder wird das auf dem Billett vorhandene Sendemodul oder das auf dem Billett vorhandene Empfängermodul intermittierend aktiv geschaltet. Nachteilig ist bei der in EP 1065625 A1 genannten Lösung, dass auch Billette, die sich nicht mehr in der betreffenden Erfassungszone befinden, Meldungen aussenden. Dieser Nachteil trifft bei der in PCT/EP00/08292 angegebenen Lösung nicht auf, dafür sind teilweise aufwendige Verfahren notwendig, um Kollisionen zu vermeiden oder in weiteren Iterationen die Kommunikation erfolgreich zu terminieren.

Der vorliegenden Erfindung liegt daher die Aufgabe zugrunde, ein einfacheres Verfahren zur Registrierung von elektronischen Billetten anzugeben, das ein sicheres und zuverlässiges Erfassen von echten Passagieren bzw. Leistungsbezügern erlaubt und bei dem die Gefahr von Kollisionen in der Kommunikation auf ein Minimum reduziert ist.

Diese Aufgabe wird durch die im Patentanspruch 1, angegebenen Massnahmen gelöst.

Durch die im kennzeichnenden Teil des Patentanspruches 1 angegebenen Verfahrensschritte sind bei Eintritt einer Vielzahl von Billetten in eine Erfassungszone und anschliessend während der im Verfahrensschritt B erfolgenden elektronischen "Stempelung" keinerlei Kollisionen möglich, da die ausgesandten Informationseinheiten stets Braodcast-Meldungen sind. Beim Verlassen der Erfassungszone durch die Passierzone ist der Personendurchsatz sehr beschränkt und daher ist die Wahrscheinlichkeit von Kollisionen in der Kommunikation von den Billetten zu Empfangseinheiten relativ klein.

Vorteilhafte Ausgestaltungen der Erfindung sind in weiteren Ansprüchen angegeben. So können sich die folgenden Vorteile zusätzlich ergeben:
i) Dadurch dass
   die im Verfahrensschritt A übermittelte erste Informationseinheit (INF1) eine Information (CYCLE1) enthält, durch die ein auf dem Billett enthaltenes zweites Sende-/Empfangsmodul (12) intermittierend aktiv geschaltet wird;
   ergibt sich eine erhebliche Reduktion des Energieverbrauchs, die die Autonomie eines Billettes wesentlich erhöht (Patentanspruch 2).
ii) Dadurch dass
   das zweite Sende-/Empfangsmodul (12) mit einer in der ersten Informationseinheit (INF1) enthaltenen Zykluszeit (t_{CYCL}) periodisch aktiv geschaltet wird;
   können durch eine feste zeitliche verschiebung der Zyklen Kollisionen mit anderen Erfassungszonen erheblich reduziert werden (Patentanspruch 3).
iii) Dadurch dass
   in der im Verfahrensschritt B empfangenen zweiten Informationseinheit (INF2) eine Information (COMMAND2) enthalten ist, die nach erfolgter Speicherung der Anwesenheitsinformation (INFA) das auf dem Billett (10) befindliche zweite Sende-/Empfangsmodul (12) deaktiviert;
   ergibt sich eine weitere erhebliche Reduktion des Energieverbrauchs, ohne dass die Erfassungsrate oder die für den Benutzer wichtige Erfassungsauflösung reduziert wird. (Patentanspruch 4).
iv) Dadurch dass
   die Frequenz der ersten Sendeeinheit (31) so gewählt ist, dass das Feld in der Passierzone (21) als Nahfeld ausgebildet ist, können die Billette (10) zuverlässig aus einem Schlafzustand geweckt werden und trotzdem verhindert werden, dass ausserhalb der Passierzone befindliche Billette (10) unnötigerweise eine erste Informationseinheit (INF1) empfangen, darüber hinaus ist eine gute Durchdringung durch den menschlichen Körper, Kleider und Taschen) zu den Billetten gewährleistet (Patentanspruch 6).
v) Dadurch dass
   im Verfahrenschritt B die zweite Informationseinheit (INF2) von der ersten Sendeeinheit (31)ausgesendet wird, ergibt sich eine Vereinfachung der Geräteausstattung und andererseits können die Billette nach Empfang einer zweiten Informationseinheit (INF2) wieder in einen Schlafzustand zurückkehren, da mit dem Nahfeld in der Erfassungszone die Billette zuverlässig geweckt werden können (Patentanspruch 8).
vi) Dadurch dass
   dem Verfahrensschritt C ein Verfahrensschritt C1 anschliesst, in dem aufgrund einer von der zweiten Sende-/Empfangseinheit (32) empfangenen dritten Informationseinheit (INF3) eine zweite Informationseinheit (INF2) ausgesendet wird, um auf dem Billett (10) die Anwesenheitsinformation (INFA) als abgebucht zu kennzeichnen;
   kann bei erneuter Benutzung des betreffenden Billettes noch nicht abgebuchte Anwesenheitsinformation anschliessend an den Verfahrensschritt A bei einer weiteren Fahrt an die zweite Sende-/Empfangseinheit übertragen werden, so dass keine negativen Folgen einer Fehlübertragungen entstehen können (Patentanspruch 11).
vii) Dadurch dass
   im Verfahrensschritt B in der zweiten Informationseinheit (INF2) eine Information (APPLICATION2) enthalten ist, die auf einem auf dem Billett (10) befindlichen Anzeigemodul anzeigbar ist,
   kann das erfindungsgemässe Verfahren auch für Zwecke der Fahrgastinformation benutzt werden, ohne die Erfassungsrate zu beinträchtigen. (Patentanspruch 12)

Die Erfindung ist nicht auf das Transportwesen beschränkt, sondern auch für elektronische Einlass- oder Eintrittskarten, z.B. in eine Ausstellung, anwendbar. Es ist auch möglich, die Erfindung als Personalausweis auszugestalten. Die in dieser Schrift benutzte Bezeichnung "Billett" umfasst daher auch stets die Begriffe "Einlasskarte", "Eintrittskarte" oder "Personalausweis"' sowie ähnliche Karten und Ausweise.

Die Erfindung wird nachfolgend anhand einer Zeichnung beispielsweise näher erläutert. Dabei zeigt:
- Fig. 1: den Grundriss eines Eisenbahnwagens mit Einstiegs- und Durchgangsbereichen und der Anordnung von Sende/Empfangseinheiten und der zugehörigen Zonen;
- Fig. 2: den Grundriss eines Autobusses mit zwei Einstiegsbereichen und der Anordnung einer Sende-/Empfangseinheit und der zugehörigen Zonen;
- Fig. 3a: Ablauf der Kommunikation mit einem Billett;
- Fig. 3b: Detaildarstellung des Ablaufes der Kommunikation mit einem Billett in einer weiteren Ausführungsform der Erfindung;
- Fig. 4: Blockschaltbild eines elektronischen Billettes für das erfindungsgemässe Verfahren.

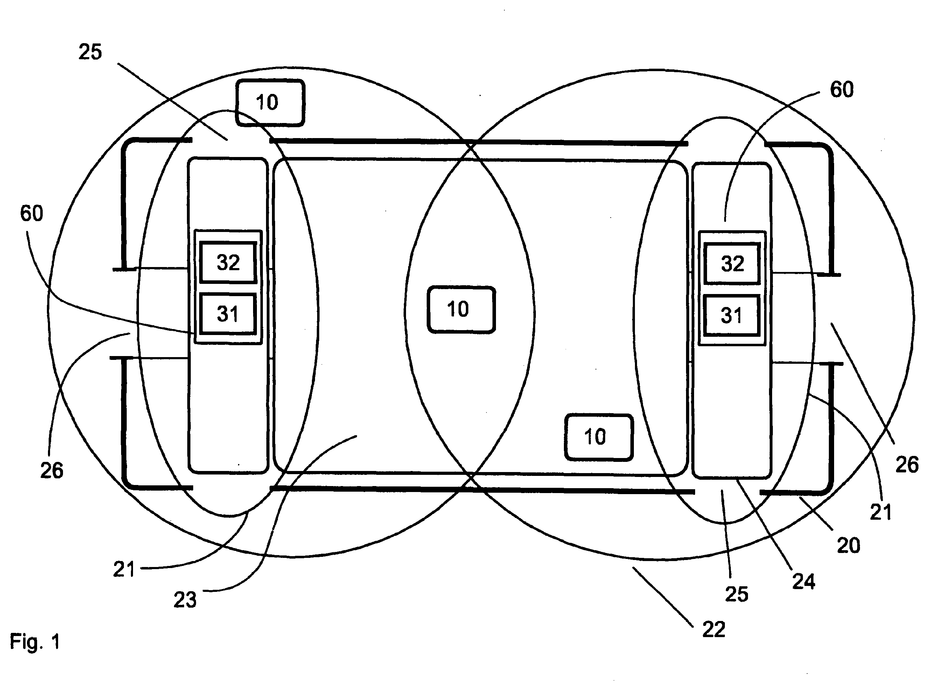

In Fig. 1 ist der Grundriss eines Eisenbahnwagens 20 mit vier Einstiegsbereichen 25 sowie je einem Durchgangsbereich 26 am Wagenende dargestellt. Der Durchgangsbereich 26 ermöglicht den Durchgang zu einem weiteren Wagen einer Zugskomposition. Diese beiden Bereiche 25, 26 ermöglichen den Zugang durch eine Plattform 24 zum Passagierraum 23. Türen sind der Übersichtlichkeit halber nicht eingezeichnet. Die Plattform 24 und der Passagierraum 23 können offen oder mit einer Wand und einer zugehörigen Türe ausgestaltet sein. Den beiden Plattformen 24 ist in einem Erfassungsgerät 60 je eine erste Sendeeinheit 31 und eine zweite Empfangseinheit 32 zugeordnet, in einer weiteren Ausgestaltung der Erfindung kann anstelle der zweiten Empfangseinheit 32 eine zweite Sende-/Empfangseinheit 32 vorgesehen sein, die ebenfalls mit dem Bezugszeichen 32 versehen wird. Im folgenden wird stets von zweier Sende-/Empfangseinheit gesprochen, je nach Verfahrenausgestaltung kann es sich dabei auch nur um eine Empfangseinheit 32 handeln. Die Sendeeinheit 31 deckt die betreffende Passierzone 21 mit einem elektromagnetischen Feld ab. Hiefür ist vorzugsweise ein Frequenz von 6.78 MHz oder 13.5 MHz oder 27 MHz vorgesehen. Die Passierzone 21 braucht in anderen Anwendungen als im vorliegenden Beispiel nicht notwendigerweise mit der Plattform 24 überein zu stimmen. Die eingezeichnete Begrenzung der Passierzone 21 entspricht ungefähr der Abdeckung hinsichtlich einer minimalen Feldstärke der betreffenden Sendeeinheit 31. Die Begrenzung der Erfassungszone 22 entspricht ungefähr der Reichweite eines auf dem Billett 10 vorhandenen zweiten Sendemoduls 12 hinsichtlich des Empfangs durch die entsprechende zweite Sende-/Empfangseinheit 32. Hiefür ist vorzugsweise ein Frequenzband von 868 MHz bis 870 MHz vorgesehen, wobei die eine Frequenz aus diesem Band für den sogenannten Down-Link, d.h. zum Billett 10 hin und eine andere Frequenz aus diesem Band für den sogenannten Up-Link, d.h. vom Billett 10 zur zweiten Sende-/Empfangseinheit 32 dient. Eine Ueberlappung der beiden Erfassungszonen 22 entsprechend der für diesen Eisenbahnwagen paarigen Anordnung der Sende-/Empfangseinheiten 32 ist notwendig, um alle Passagiere unabhängig von ihrer Lage im Eisenbahnwagen 20 erfassen zu können. Je nach gesetzlicher Regulierung ist auch eine Anwendung einer Frequenz im Bereich 432-434 MHz zweckmässig.

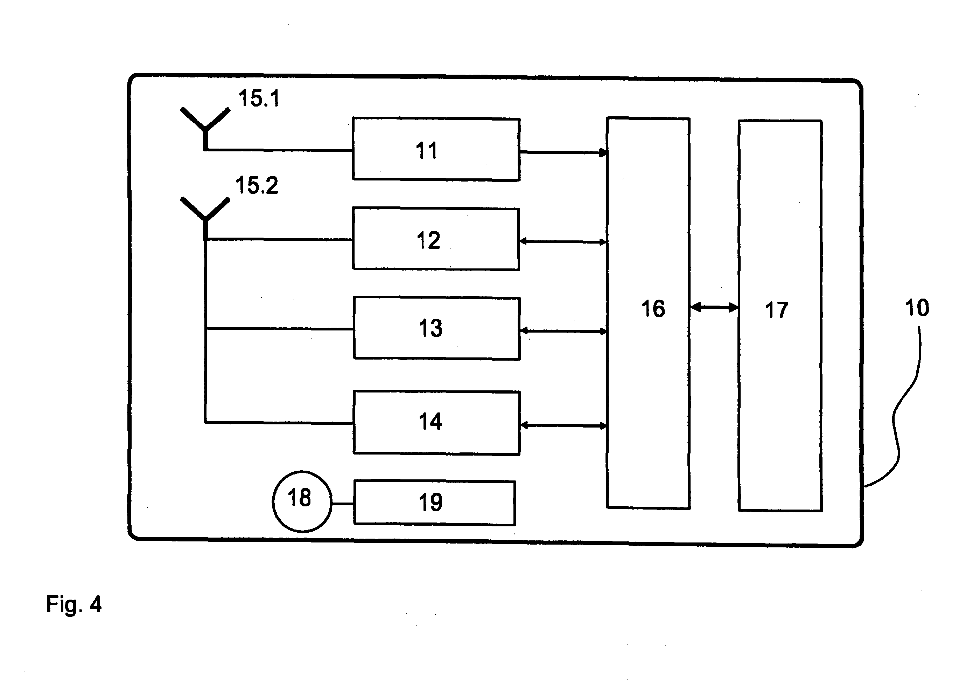

Fig. 4 zeigt das Blockschaltbild eines elektronischen Billettes 10. Solche Billette 10 haben vorzugsweise ein Kreditkartenformat. Im Blockschaltbild ist als zentrale Steuereinheit ein Prozessormodul 16 vorgesehen mit einem zugeordneten Speichermodul 17 sowie mit einem Empfangsmodul 11, einem zweiten 12, einem dritten 13 und einem vierten Sende-/Empfangsmodul 14 verbunden. Abhängig von den gewählten Frequenzen können nur eine oder mehrere Antennen vorgesehen sein, in der Ausführungsform gemäss Fig. 4 sind zwei Antennen 15.1 und 15.2 vorgesehen. Die Energieversorgung erfolgt mittels einer Batterie 19 und einem Energieversorgungsmodul 18; die Verbindungen sind der Übersichtlichkeit halber nicht eingezeichnet. In einer weiteren Ausgestaltung kann das Billett 10 zusätzlich ein Anzeigemodul aufweisen (nicht dargestellt in Fig. 4). Die nachfolgend beschriebene Ausführungsform des erfindungsgemässen Verfahrens ist nicht beschränkt auf die angegebenen ersten Empfangsmodul 11 und dem zweiten Sende-/Empfangsmodul 12; dazu können auch das dritte und/oder vierte Sende-/Empfangsmodul 13 bzw. 14 vorgesehen sein und entsprechend gewählte Uebertragungswege und Frequenzen; z.B. Proximity-Cards.

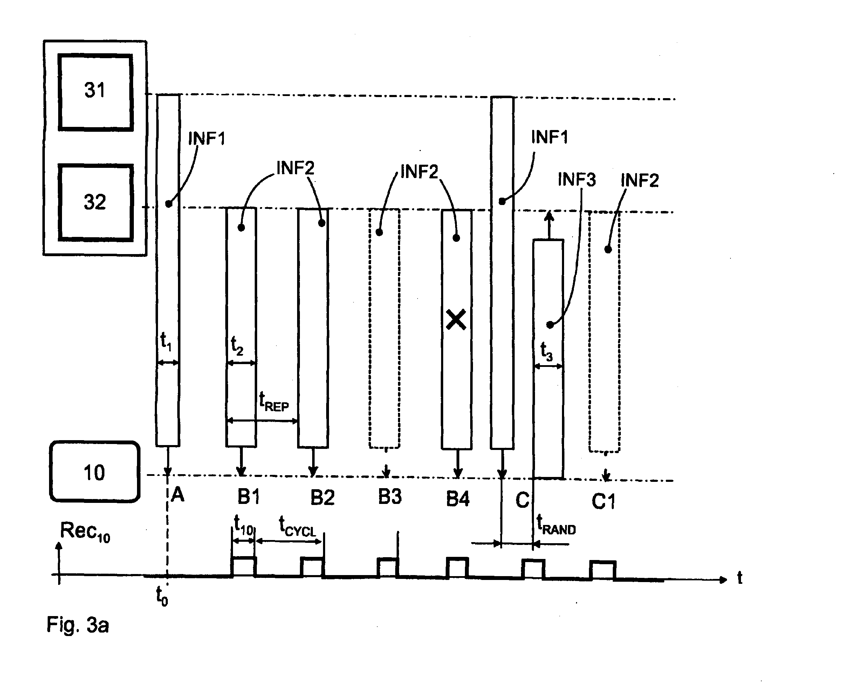

Eine erste Ausführungsform des erfindungsgemässen Verfahrens wird nun anhand der Fig. 3a für einen Autobus 100 oder einen Eisenbahnwagen 20 erläutert, wobei für den Eisenbahnzug in dieser Ausführungsform vorausgesetzt wird, dass die einzelnen Einheiten 31, 32 in den Wagen über eine Draht- oder Luftschnittstelle vernetzt sind. Fig. 3a zeigt den Informationsfluss über die Luftstrecke zwischen einem elektronischen Billett 10 und einer Erfassungseinheit 60, die, wie vorstehend beschrieben, eine erste Sendeeinheit 31 und eine zweite Sende-/Empfangseinheit 32 enthält. Zur Vereinfachung der Erläuterungen wird nicht in jedem Fall zwischen einem Verfahrensschritt, z.B. B2, und dem Zeitpunkt oder der Zeitdauer, in dem dieser Verfahrensschritt startet bzw. abläuft unterschieden; wo keine Missverständnisse entstehen, wird auch für den Zeitpunkt oder die ungefähre Zeitdauer ebenfalls das Zeichen B2 verwendet.

### Verfahrensschritt A

### Voraussetzung:

Das Billett 10 befinde sich in einem energiesparenden "Schlafzustand", d.h. es ist nur das erste Empfangsmodul 11 empfangsbereit.

### Beschreibung des Verfahrensschrittes A:

Nähert sich nun eine Person einem Einstiegsbereich 25 des Autobusses 100 - im folgenden meist nur Bus genannt -, gelangt diese Person mit dem Billett 10 in die sogenannte Passierzone 21. Von der ersten Sendeeinheit 31 wird bei offenen Türen periodisch, z.B. in einem Takt von 0.5 s eine Informationseinheit ausgesendet. Diese INF1 genannte Informationseinheit hat einen Aufbau gemäss Tabelle 1

### Informationseinheit INF1

**Tabelle 1**

| **Informationsfeld** | **Bedeutung** |
|---|---|
| ADDRESS1 | Adresse der Sendeeinheit 31 |
| CYCLE1 | Zeiteinheit, Zeitbezug; Zykluszeit |
| COMMAND1 | Befehle an das Billett 10 |
| POSITION1 | Ort, Einsteigeort |
| COURSE1 | Kurs- und/oder Wagennummer |
| DATETIME1 | Datum und Uhrzeit |
| TYPE1 | Art des Verkehrsmittels |

Im Billett 10 werden diese Angaben in einem Bereich des Speichermoduls 17 abgelegt: INF1ₙ. Ein mehrmaliges Empfangen dieser Informationseinheit bewirkt nur dann eine weitere, separate Speicherung INFₙ₊₁, wenn das Feld COURSE1 geändert hat. Dieser Fall kann dann auftreten, wenn die Person in den Bus 100 ein- und gleich wieder ausgestiegen ist und anschliessend in einen anderen Bus einsteigt. Dieser Vorgang tritt auch dann auf, wenn eine Person sich in einem Bahnhof mit dem erfindungsgemässen Billett 10 längs verschiedener Züge an den jeweiligen Eintrittszonen 21 vorbeimarschiert und deren Türen geöffnet sind. Sind die Angaben im Feld COURSE1 erhalten geblieben, werden vorzugsweise nur die Felder CYCLE1 und COMMAND1 aktualisiert. Dieser Vorgang ist nicht auf ein Billet 10 beschränkt, sondern tritt gleichzeitig auf bei allen in der Eintrittszone 21 befindlichen Billetten 10 auf, da das Aussenden der Informationseinheiten INF als sogenannte Broadcast-Meldung ausgestaltet ist. Der Zeitpunkt t₀ ist in Fig. 3a dem Empfang der Informationseinheit INF1 auf dem Billett 10 zugeordnet. Die Dauer zur vollständigen Aussendung der Einheit INF1 beträgt t₁, z.B. t₁ = 30 .. 80 ms pro Polarisation. Mit dem Empfang von Informationseinheiten INF1 mit den Feldern COMMAND1 und CYCLE1 wird ein Zeitglied des Prozessormoduls 16 initialisiert. Dieses Zeitglied bewirkt ein intermittierendes Einschalten des zweiten Sende-/Empfangsmoduls 12 gemäss einer im Feld CYCLE1 enthaltenen Taktzeit t_{CYCLE}. In dem Feld CYCLE1 ist auch der Bezug der Zeit definiert. In der Fig. 3a ist der jeweilige Schaltzustand des zweiten Sende-/Empfangsmoduls 12 auf dem Billett 10 mit Rec₁₀ (Rec: receive) bezeichnet.

### Verfahrensschritt B1

### Voraussetzung:

Eine Person ist mit einem Billett 10 gemäss Verfahrensschritt A in den Bus 100 eingestiegen, der Bus 100 ist jedoch noch nicht abgefahren.

### Beschreibung des Verfahrensschrittes B1:

Von der zweiten Sende-/Empfangseinheit 32 wird iterativ mit der Wiederholzeit t_{REP} eine zweite Informationseinheit INF2 ausgesandt und von einem Billett 10 empfangen. Die Informationseinheit INF2 weist beispielhaft einer Struktur gemäss Tabelle 2 auf.

### Informationseinheit INF2

**Tabelle 2**

| **Informationsfeld** | **Bedeutung** |
|---|---|
| ADDRESS2 | Empfangene Adresse einer Sende-/Empfangseinheit 32 |
| CYCLE2 | Zeiteinheit, Zeitbezug, Zykluszeit |
| COMMAND2 | Befehle an das Billett 10 |
| POSITION2 | Ort |
| COURSE2 | Kursnummer |
| DATETIME2 | Datum und Uhrzeit |
| TYPE2 | Art des Verkehrsmittels |
| ADDRESS2 | Adresse der Sende-/Empfangseinheit 32 |
| DUTY2 | Spezifizierung des Leistungsbezuges |
| APPLICATION2 | Anwendung |

Mit dem Empfang der Informationseinheit INF2 auf dem Billett 10 wird das Zeitglied des Prozessormoduls 16 mit dem Inhalt des Feldes CYCLE2 in dem Fall aktualisiert, wenn im Feld COMMAND z.B. der Wert SYNCH eingetragen ist. Im Feld DUTY2 steht der Wert NO_CHARGE, dies bedeutet, dass das Billett die übrigen Felder mit Ausnahme von CYCLE2 und COMMAND ignorieren kann. Wenn der betreffende Bus einen längeren Aufenthalt machen muss, wird dieser Verfahrensschritt entsprechend iteriert. Je nach Anwendung und Fahrzeugart kann t_{REP} in der Grössenordnung von z.B. 5 s bis 600 s liegen. Die Dauer der Uebermittlung der Informationseinheit INF2 wird vorzugsweise etwa gleich gross wie Einschaltdauer t₁₀ gewählt und beträgt etwa t₂ = 5 .. 10 ms.

### verfahrensschritt B2

### Voraussetzung:

Eine Person mit einem Billett 10 befindet sich in einem Bus 100, der abgefahren ist. Das Billett 10 ist in einem Zustand gemäss der Vorgeschichte der Verfahrensschritte A und ggf. B1.

### Beschreibung des Verfahrensschrittes B2:

Zum Zeitpunkt B2 wird eine von der zweiten Sende-/Empfangseinheit 32 ausgesandte Informationseinheit INF2 vom Billett 10 empfangen. Im Feld DUTY2 steht der Wert CHARGE, dies führt dazu, dass auf dem Billett 10 im Speichermodul 17 unter folgender Bedingung ein Eintrag gemacht wird:
Stimmen die Angaben im Feld COURSE2 mit einem auf dem Billett 10 im verfahrensschritt A gespeicherten Wert COURSE1 aus INFₙ, INFₙ₊₁, .. , überein, wird der vorgenannte Eintrag aus dem Verfahrensschritt A mit einem Kennzeichen versehen und als 1. Eintrag einer sogenannten Anwesenheitsinformation INFA im Speichermodul zusammen mit dem in diesem Verfahrensschritt B2 empfangenen Angaben gespeichert. Diese Anwesenheitsinformation INFA hat beispielsweise eine Struktur gemäss der nachfolgend angegebenen Tabelle 3.

### Aawesenheitsinformation INFA

**Tabelle 3**

| **Informationsfeld** | **Bedeutung** |
|---|---|
| ADDRESS1 | Empfangene Adresse einer Sendeeinheit 31 |
| ADDRESS2 | Empfangene Adresse einer Sendeeinheit 32 |
| COURSE1 | Kursnummer |
| POSITION1 | Erster markierter Ort aufgrund des Empfangs von der Informationseinheit INF1 |
| DATETIME1 | Datum und -zeit aufgrund des Empfangs von der Informationseinheit INF1. |
| POSITION2 | Markierter Ort aufgrund des letzten Empfangs der Informationseinheit INF2. |
| DATETIME2 | Datum und -zeit aufgrund des letzten Empfangs der Informationseinheit INF2. |
| | |

Je nach Anwendung kann in der Anwesenheitsinformation INFA zu einer "Stempelung" mit den Feldern POSITION/DATETIME noch ein zusätzliches Feld DUTY angelegt sein, in dem für die in POSITION/DATETIME gespeicherten Angaben auch noch die Art des Leistungsbezuges enthalten ist. Die Anwesenheitsinformation kann demzufolge eine Iteration der vorgenannten Felder enthalten, z.B.
POSITION1
DATETIME1
DUTY1
POSITION2

In einer besonders zweckmässigen Ausführung der Erfindung kann in der zweiten Informationseinheit INF2 im Feld APPLICATION2 die nächste Haltestelle des betreffenden Verkehrsmittels und im Feld COMMAND2 ein Eintrag DISPLAY enthalten sein. Der Inhalt des Feldes APPLICATION2 wird daraufhin vom Prozessormodul 16 einem auf dem Billett 10 befindlichen Anzeigemodul zugeführt und stellt für den Benutzer eine wichtige Information dar. Der Verfahrensschritt B2 wird vorzugsweise bei Kurzstreckenverkehrsmittel iteriert. Dies ist nicht nur wegen der vorerwähnten Haltestelleninformation notwendig, sondern auch aus Gründen zuverlässigen und lückenlosen "Stempelung" der Billette in den einzelnen Fahrtabschnitten.

### Verfahrensschritt B3

### Voraussetzung:

Auf dem Billett 10 ist aus den Verfahrensschritten A, b2 und ggf. B1 wenigstens ein Eintragspaar aus zwei Informationseinheiten INF1 und INF2 gemäss der Darstellung in Tabelle 4 vorhanden.

### Beschreibung des Verfahrensschrittes B3:

Gemäss der in den Feldern CYCLE1 oder CYCLE2 vereinbarten Zykluszeit erfolgt in diesem Verfahrensschritt B3 ebenfalls ein Empfang einer zweiten Informationseinheit INF2 wie im Verfahrensschritt B2; dieser Vorgang kann zum besseren Verständnis für den Anwender als eine periodische "Stempelung" eines Billettes betrachtet werden. Je nach Anforderung einer Verkehrsunternehmung oder eines Fahrgeldmanagementbetreibers für mehrere Verkehrsunternehmungen können in diesem Verfahrensschritte verschiedene vorteilhafte Ausgestaltung der vorliegenden Erfindung vorgenommen werden.

In einer weiteren Ausgestaltung kann auf dem Billett 10 wie in Tabelle 3 bereits vorweggenommen, der vorletzte Eintrag POSITION2 und DATETIME2 mit einem soeben empfangenen Wert aus der Informationseinheit INF2 überschrieben werden. Vorteilhaft ist, dass dadurch auf dem Billett erheblich Speicher eingespart werden kann. Ist die Anforderung, dass gegenüber einem Passagier oder Leistungsbezüger stets ein in der vorliegenden Diskretisation gemäss der Zeit t_{REP} lückenloser Nachweis zu erbringen ist, werden vorzugsweise die Einträge POSITION2 und DATETIME2 fortlaufend gespeichert. Zusätzlich können weitere Einträge gespeichert werden, beispielsweise aus dem Feld DUTY, in dem Werte der Art CHARGE1, CHARGE2 vorgesehen sind, die eine verschiedene Tarifierung während einer Fahrt erlauben.

In einer weiteren Ausführungsform kann vorgesehen werden, dass in der zweiten Informationseinheit INF2 ein Feld CYCLE2 - vgl. Tabelle 2 - vorhanden ist, mit dem das auf dem Billett 10 befindliche zweite Sende-/Empfangsmodul 32 bezüglich der Empfangsbereitschaft in einem veränderten Zyklus t_{CYCL} aktiv geschaltet wird. Dies ist insbesondere dann vorteilhaft, wenn ein Zug zunächst kurz aufeinander folgende Stationen bedient und anschliessend als Intercity-Zug eine deutlich entfernte Stadt anfährt. Dadurch wird die Autonomie der Billette 10 weiter verbessert, da für diesen Fall die "Stempelung" gemäss dem Verfahrensschritt B nicht mehr so häufig notwendig ist.

Alternativ oder kumulativ zur vorgenannten Neueinstellung der Zykluszeit t_{CYCL} und unabhängig von der Ausgestaltung mit der fortlaufenden Ueberschreibung des letzten Eintrages von POSITION2 und DATETIME2 kann zur Energieeinsparung vorgesehen werden, dass im Feld COMMAND2 ein Wert ASLEEP steht, der bewirkt, dass das betreffende Billett 10 nach erfolgtem Empfang einer zweiten Informationseinheit INF2 wieder in den ursprünglichen Schlafzustand fällt.

### verfahrensschritt B4

### Voraussetzung:

Das Billett 10 ist in einem Zustand gemäss der Vorgeschichte der Verfahrensschritte A und B2, ggf. B1.

### Beschreibung des Verfahrensschrittes B4:

Der Verfahrensschritt B4 beschreibt einen Fehlerfall, indem aus Gründen von misslichen Empfangsbedingungen eine zweite Informationseinheit INF2 vom Billett 10 nicht empfangen werden konnte. Die im Verfahrensschritt A empfangene erste Informationseinheit INF1 enthält im Feld CYCLE1 bevorzugt noch einen Wert, der angibt, wie oft das auf dem Billett 10 befindliche Empfangsmodul 12 aktiv geschaltet wird: Wird während dieser genanten Anzahl keine zweite Informationseinheit INF2 empfangen, fällt das Billett 10 wieder in einen Schlafzustand. Im nachfolgend erläuterten Verfahrensschritt C wird gezeigt, dass das erfindungsgemässe Verfahren auch einen solchen Fehlerfall beherrscht, in dem keine einzige zweite Informationseinheit empfangen wurde, allerdings mit der Einschränkung, dass einem Benutzer kein Nachweis über den tatsächlichen Aufenthalt in der Erfassungszone 22 erbracht werden kann.

### Verfahrensschritt C

### Voraussetzung:

Das Billett 10 ist in einem Zustand gemäss der Vorgeschichte der Verfahrensschritte A und ggf. B1, und B2.

### Beschreibung des Verfahrensschrittes C:

Eine Person mit einem Billett 10 verlässt durch die Passierzone 21 die Erfassungszone 22. Ein ordnungsgemässes Verlassen der vorgenannten Zone 22 bedingt, dass die Türen des Autobusses geöffnet werden. Dadurch wird die erste Sendeeinheit 31 aktiviert und das Billett 10 empfängt eine erste Informationseinheit INF1 gemäss der in Tabelle 1 angegebenen Struktur. Unabhängig vom Zustand des Billettes 10, z.B. Schlafmodus, wird durch das Prozessormodul 16 erkannt, dass die Identität der Erfassungszone 22 erhalten geblieben ist. Für den regulären Fall, wo durch den Empfang von zweiten Informationseinheiten INF2 im Speichermodul 17 eine Anwesenheitsinformation INFA gemäss den Angaben in Tabelle 3 angelegt ist, wird vom auf dem Billett 10 befindlichen zweiten Sende-/Empfangsmodul eine dritte Informationseinheit INF3 zur zweiten Sende-/Empfangseinheit 32 übertragen. Die Struktur dieser dritten Informationseinheit INF3 ist der nachfolgenden Tabelle 4 zu entnehmen.

### Informationseinheit INF3

**Tabelle 4**

| **Informationsfeld** | **Bedeutung** |
|---|---|
| ADDRESS3 | Empfangene Adresse einer Sende-/Empfangseinheit 32 |
| COURSE3 | Kursnummer |
| POSITION1 | Erster markierter Ort |
| DATETIME1 | zeitstempel zum Feld POSITION1 |
| DUTY1 | Art des Leistungsbezuges zu POSITION1 |
| POSITION2 | Zweiter markierter Ort |
| DATETIME2 | Zeitstempel zum Feld POSITION1 |
| DUTY2 | Art des Leistungsbezuges zu POSITION2 |
| : | |
| TYPE3 | Art des Billettes |
| TICKET_ID3 | Billettidentität |
| : | |
| ATTRIBUTES3 | Eigenschaften |
| STATE3 | Zustandsinformation |

In der Sende-/Empfangseinheit 32 werden nur jene Informationseinheiten INF3 bearbeitet, die wenigstens bezüglich der Angaben im Feld COURSE3 und/oder ADDRESS3 übereinstimmen. Bei einer solchen Uebereinstimmung werden die in der dritten Informationseinheit INF3 enthaltenen Angaben als Billettrecords TICK_REC gespeichert, beispielsweise in der zweiten Sende-/Empfangseinheit 32 oder in einem dieser zugeordneten Bordrechner. Eine Billettrecord TICK_REC hat beispielsweise eine Struktur nach Tabelle 5, REC steht hier in der Bedeutung von "record".

### Billettrecord TICK_REC

**Tabelle 5**

| **Informationsfeld** | **Bedeutung** |
|---|---|
| TYPE | Art des Billettes |
| TICKET_ID | Billettidentität |
| : | |
| ATTRIBUTES | Eigenschaften |
| : | |
| POSITION1 | Erster markierter Ort aufgrund des Empfangs von der Informationseinheit INF1 |
| DATETIME1 | Datum und Zeit aufgrund des Empfangs von der Informationseinheit INF1. |
| DUTY1 | Art des Leistungsbezuges zu POSITION1 |
| POSITION2 | Markierter Ort aufgrund des letzten Empfangs der Informationseinheit INF2. |
| DATETIME2 | Datum und Zeit aufgrund des letzten Empfangs der Informationseinheit INF2. |
| DUTY2 | Art des Leistungsbezuges zu POSITION2 |
| : | |
| POSTION_TRANSFER | Ort zum Zeitpunkt des Empfangs von INF3 |
| DATETIME_TRANSFER | Zeitpunkt des Empfangs von INF3 |
| STATE | Zustandsinformation |
| : | |

Die Anlage solcher Billettrecords TICK_REC belegt die Anwesenheit eines Billettes 10 der Identität TICKET_ID mit Angabe einer Folge von jeweiligem Ort, jeweiligem Datum und Uhrzeit sowie ggf. jeweiliger Art des Leistungsbezuges. Die Ortsangabe ist in einem Steuersystem des betreffenden Autobusses 100 bekannt durch z.B. GPS-Empfänger oder durch eine anderes System zur Ortung von öffentlichen Verkehrsmittel. Im verfahrensschritt C sind Kollisionen möglich, dazu zunächst folgende Rechnung: Der Durchsatz von Personen durch eine Türe eines öffentlichen Verkehrsmittels beim Aussteigen beträgt unter sehr idealen Bedingungen etwa maximal 10 Personen. Die Uebertragung einer dritten Informationseinheit benötigt im eingangs genannten Frequenzbereich maximal t₃ = 10 ms. Durch einen auf dem Billett 10 enthaltenen Zufallszahlengenerator, dessen Ausgabewerte abhängig sind von der auf dem Billett gespeicherten Identität, erfolgt eine Aussendung der dritten Informationseinheit INF3 zu einer um t_{RAND} verzögerten Zeitdauer nach Empfang der ersten Informationseinheit INF1, vgl. ungefähre Darstellung in Fig. 3a. Vorzugsweise ist vorgesehen, dass sich die Billette 10 die dritte Informationseinheit INF3 mehrmals zufällig gewählten Abständen aussenden, wobei die Gesamtdauer nicht grösser als etwa 4 s ist. Auf diese weise lassen sich Kollisionen ein Minimum reduzieren; eine Nichterfassfung ist unwahrscheinlich. Zu beachten ist auch, dass der Durchsatz beim Aussteigen etwa 5 bis 8 Personen pro Sekunde beträgt.

### Verfahrensschritt C1

### Voraussetzung:

Ein Billett 10 ist in einem Zustand gemäss der Vorgeschichte des Verfahrensschrittes C.

### Beschreibung des Verfahrensschrittes C1:

In einer vorteilhaften Weiterbildung der vorliegenden Erfindung kann dem Verfahrensschritt C ein Verfahrensschritt C1 nachfolgen, der einerseits die Gefahr von Kollisionen der vorgenannten Art reduziert und die vorerwähnte Nichterfassung aufgrund von Kollisionen ausschliesst. Dazu ist vorgesehen, dass die Sende-/Empfangseinheit nach erfolgtem Empfang einer dritten Informationseinheit INF3 eine zweite Informationseinheit INF2 aussendet, die in einem in Tabelle 2 nicht dargestellten Feld TICKET_ID2 die Identität des betreffenden Billettes 10 enthält und im Feld COMMAND beispielsweise den Wert ACK (acknowledge, Bestätigung). Der Empfang dieser zweiten Informationseinheit INF2 bewirkt auf dem betreffenden Billett 10, dass eine weitere Aussendung einer dritten Informationseinheit INF3 unterbleibt. Die übrigen Billette 10 empfangen diese zweite Informationseinheit INF2 ebenfalls, da die darin enthaltene Identität des Billettes 10 nicht übereinstimmt, wird der Empfang einer solchen Informationseinheit INF2 ignoriert. Mit dem Empfang einer solchen zweiten Informationseinheit wird die auf dem Billett 10 gespeicherte Anwesenheitsinformation INFA als abgebucht gekennzeichnet. Wenn der seltene Fall auftritt, dass eine solche Abbuchung unterbleibt - dabei ist es unerheblich ob die dritte Informationseinheit INF3 nicht empfangen wurde oder die Quittierung gemäss Verfahrensschritt C1 unterblieb - weist das erfindungsgemässe Verfahren den Vorteil auf, dass die bezogene Fahrt oder Leistung trotzdem noch erfasst werden kann: Bei einer nächsten Fahrt wird das Billett 10 gemäss dem Verfahrensschritt A aus dem Schlafzustand geweckt. Dabei wird durch das Prozessormodul festgestellt, dass auf dem Billett 10 noch nicht abgebuchte Anwesenheitsinformation vorhanden ist. Das Prozessormodul 16 veranlasst nun in einem Verfahrensschritt A1 die Aussendung einer dritten Informationseinheit INF3 gemäss dem vorstehend beschriebenen Verfahrensschritt C und allenfalls einem Verfahrensschritt C1.

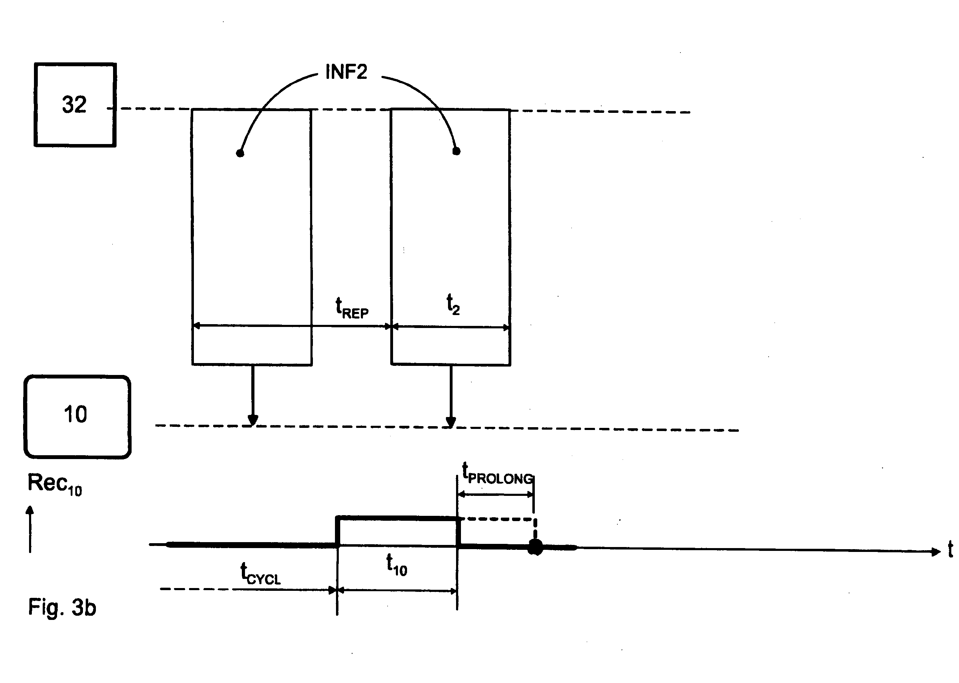

In der Fig. 3b ist eine Variante einer Ausführungsform des vorliegenden erfindungsgemässen Verfahrens gezeigt, für den Fall, wo die in den Wagen 20 eines Eisenbahnzuges befindlichen Erfassungsgeräte 60 von Wagen zu Wagen nicht synchronisiert und/oder nicht über die gleiche Information bezüglich aktueller Zykluszeit oder Position oder aktuellem Kurs verfügen, vgl. Felder CYCLE, POSITION oder COURSE in der ersten und zweiten Informationseinheit. Damit beim Uebergang von einem Wagen 20 zu einem anderen Wagen 20 ein Billett 10 tatsächlich eine zweite Informationseinheit empfangen kann, ist die Repetitionszeit t_{REP} so gewählt, dass zusammen mit der Dauer t₂ für die Uebermittlung einer zweiten Informationseinheit INF2 durch eine Ueberlappung sichergestellt ist, dass diese vom Billett 10 während der Aktivschaltung des Empfangsmoduls 12 auch empfangen werden kann. Unabhängig von diesem Fall ist in der Figur 3b dargestellt, dass die Empfangsbereitschaft des Empfangsmoduls 12 in jenen Fällen durch das Prozessormodul 16 verlängert wird, wenn bei der vorgesehenen Abschaltung des Empfangsmoduls 12 die Informationseinheit INF2 noch nicht vollständig übertragen ist. Dies ist in Fig. 3b mit der Zeitdauer t_{PROLONG} dargestellt.

Die fahrzeugseitig gespeicherten Billettrecords TICK_REC werden über Funkt oder einen Massenspeicher einem Rechnersystem zugeführt, dass die Vielzahl solcher Records zu einzelnen zusammenhängenden Fahrten vereinigt und daraus eine Fakturierung zuhanden eines Kunden oder eine Abbuchung von einem Guthabenkonto vornimmt (CREDIT- oder DEBIT-Verfahren). Durch ein Postprocessing mit einer Plausibilitätsprüfung können allfällig fehlende Zwischenstempel "TICKET_ID/POSITION/DATETIME/.. rekonstruiert werden. Ebenso können allfällige Doppelerfassungen, die durch die Ueberlappung der Erfassungszonen 22 entstehen, erkannt und eliminiert werden.

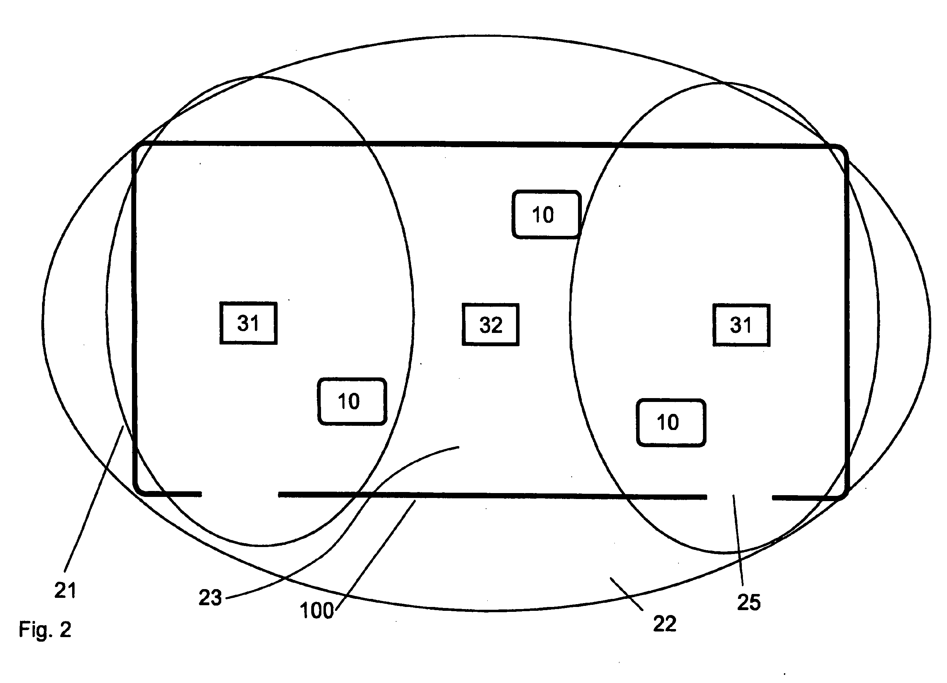

Die Anordnung der Sendeeinheit 31 und der Sende-/Empfangseinheit 32 ist nicht auf jene gemäss den Darstellungen in Fig. 1 und 2 beschränkt, sondern kann der jeweiligen Anwendung angepasst werden. Neben der bereits erwähnten Integration der Sendeeinheit 31 und der Sende-/Empfangseinheit 32 in ein Erfassungsgerät 60 kann vorgesehen sein, solche Erfassungsgeräte 60 mehrfach längs eines Wagens vorzugsweise an oder über der Innendecke anzuordnen und entweder dem Bedarf entsprechend nur teilweise zu bestücken oder durch einen Einstellparameter das gewünschte Betriebsverfahren gemäss den vorgenanten Verfahrensschritten A, B und C vorzugeben. Die mehrfache Anordnung von solchen Erfassungsgeräten 60 ist insbesondere dann erforderlich, wenn die Uebermittlung gemäss Verfahrensschritt B in einem Frequenzbereich erfolgt, dass das Feld in einer Teilmenge der Erfassungszone 22 als Nahfeld ausgebildet ist. Vorzugsweise ist dies der gleiche Frequenzbereich wie im Verfahrensschritt A.

Das erfindungsgemässe Verfahren kann mit Erfassungsgeräte beim Eingang durchgeführt werden, bei dem die Erfassungsgeräte als eine Schreib-/Lesevorrichtung ausgebildet sind und aufgrund der elektrischen Eigenschaften das Billett 10 durch den Benutzer in die Nähe, z.B. in einem Abstand von 10 .. 20 cm, gebracht werden muss, damit der Verfahrensschritt A und/oder C durchführbar wird. Dadurch ist eine vielfältige Nutzung des erfindungsgemässen Verfahrens möglich.

Das erfindungsgemässe Verfahren kann auch für den Bezug und die Verrechnung vergleichbarer Leistungen benutzt werden, z.B. als Eintrittskarte in ein Kino oder eine Ausstellung. Oft sind in einer Ausstellung verschiedene zusätzliche kostenpflichtige Sektionen vorhanden. Das erfindungsgemässe Verfahren erlaubt, dass ein Besucher bestimmte solche Sektionen ohne Nachzahlung nur einmal besuchen darf.

Ebenso kann die Erfindung auch angewendet werden für die Überwachung und Sicherung von Personen in bestimmten Zonen. Dies kann in Anlagen erforderlich sein, wo potentiell mit einem Unfall gerechnet werden muss und mit Hilfe der Erfindung der letzte registrierte Aufenthaltsort einer Person bzw. der ihr zugeordneten elektronischen Ausweiskarte (=Billett) festgestellt werden kann, damit Rettungskräfte gezielt suchen und intervenieren können. Ebenso kann die Erfindung angewendet werden, um ein Bewegungsprofil einer Person in einem hochsensitiven Bereich mit verschiedenen Zonen aufzeichnen zu können, beispielsweise auch für die Überwachung einer Person in sogenannter Halbgefangenschaft. Durch das Anordnen von ersten Sendeeinheiten 31 an bestimmten Stellen in einem Areal, wird erfindungsgemäss ein Verfahrensschritt A resp. C generiert. Die im verfahrensschritt C übermittelte dritte Informationseinheit INF3 kann von der zweiten Sende-/Empfangseinheit 32 benutzt werden, um bestimmte Tore automatisch oder nach Eingabe eines Passwortes zu öffnen.

Mit dem erfindungsgemässen Verfahren können auch Objekte auf einem Förderweg überwacht werden, dazu wird ein elektronisches Billett vorzugsweise in einer gesicherten Art am betreffenden Objekt befestigt.

Die Erfindung kann auch genutzt werden für die Generierung und Auswertung statistischer Daten, z.B. die Belegung eines Zuges, ohne dass mit diesem Verfahren auch eine kostenpflichtige Abrechnung resultiert.

### Liste der Bezugszeichen

- 10: elektronisches Billett
- 11: Erstes Empfangsmodul
- 12: Zweites Sende-/Empfangsmodul
- 13: Drittes Sende-/Empfangsmodul
- 14: Viertes Sende-/Etnpfangsmodul
- 15: Antennen
- 16: Prozessormodul
- 17: Speichermodul
- 18: Energieversorgungsmodul
- 19: Batterie
- 20: Eisenbahnwagen
- 21: Passierzone
- 22: Erfassungszone
- 23: Passagierraum
- 24: Plattform
- 25: wageneingang
- 26: Wagendurchgang
- 31: Erste Sendeeinheit
- 32: Zweite Empfangseinheit, zweite Sende-/ Empfangseinheit
- 35: Bordrechner
- 36: Abgesetztes Rechnersystem für Auswertung/Fakturierung
- 60: Erfassungsgerät
- 100: Autobus

## Patentansprüche

1. Verfahren zur Registrierung von Billetten (10) für die Feststellung einer zu beziehenden Leistung und/oder einer definierten Anwesenheit, wobei die Billette (10) ein Prozessormodul (16), ein Speichermodul (17) und wenigstens ein erstes Empfangsmodul (11) und ein zweites Sende-/Empfangsmodul (12) aufweisen und wobei in einer Erfassungszone (21, 22) wenigstens eine erste Sendeeinheit (31) und eine zweite Sende-/Empfangseinheit (32) für die Kommunikation mit Billetten (10) vorgesehen ist und der Erfassungszone (22) wenigstens eine Passierzone (21) zugeordnet ist, durch die die Erfassungszone (22) betreten und verlassen werden kann,
**dadurch gekennzeichnet,**
**dass** die eine Grundlage für die Feststellung der bezogenen Leistung und/oder der definierten Anwesenheit bildende Registrierung folgende Verfahrensschritte enthält:
A Durch die Passierzone (21) in die Erfassungszone (22) gelangende Billette (10) empfangen über das erste Empfangsmodul (11) von der ersten Sendeeinheit (31) eine erste Informationseinheit (INF1), in der eine der Erfassungszone (22) zugeordnete Identität enthalten ist und die nach Empfang auf dem Billett gespeichert wird;
B zu wenigstens einem späteren Zeitpunkt, der durch die definierte Anwesenheit oder durch den Bezug der Leistung bestimmt ist, empfangen in der Erfassungszone (22) befindliche Billette (10) eine zweite Informationseinheit (INF2), die die der Erfassungszone (22) zugeordnete Identität enthält und die bei Uebereinstimmung mit der im Verfahrensschritt A gespeicherten Identität auf dem Billett (10) als Anwesenheitsinformation (INFA) gespeichert wird;
C durch die Passierzone (21) die Erfassungszone (22) verlassende Billette (10) empfangen eine weitere erste Informationseinheit (INF1) und aufgrund von im Verfahrensschritt B gespeicherter Anwesenheitsinformation (INFA) wird vom zweiten Sende-/Empfangsmodul (12) eine die Anwesenheitsinformation (INFA) und die Identität des Billettes (10) enthaltende dritte Informationseinheit (INF3) an die zweite Sende-/Empfangseinheit (32) übermittelt und wenigstens einmal als Billettrecord (TICK_REC) registriert.

2. Verfahren nach Anspruch 1,
**dadurch gekennzeichnet,**
**dass** die im Verfahrensschritt A übermittelte erste Informationseinheit (INF1) eine Information (CYCLE1) enthält, durch die das zweite Sende-/Empfangsmodul (12) bezüglich des Empfangs intermittierend aktiv geschaltet wird.

3. Verfahren nach Anspruch 2,
**dadurch gekennzeichnet,**
**dass** das zweite Sende-/Empfangsmodul (12) mit einer in der ersten Informationseinheit (INF1) als Zykluszeit (t_{CYCL}) enthaltenen Information periodisch aktiv geschaltet wird.

4. Verfahren nach einem der Ansprüche 1 bis 3,
**dadurch gekennzeichnet,**
**dass** in der im Verfahrensschritt B empfangenen zweiten Informationseinheit (INF2) eine Information (COMMAND2) enthalten ist, die nach erfolgter Speicherung der Anwesenheitsinformation (INFA) das auf dem Billett (10) befindliche zweite Sende-/Empfangsmodul (12) deaktiviert.

5. Verfahren nach einem der Ansprüche 1 bis 4,
**dadurch gekennzeichnet,**
**dass** im Verfahrensschritt B die zweite Informationseinheit (INF2) von der zweiten Sende-/Empfangseinheit (32) ausgesendet wird.

6. Verfahren nach einem der Ansprüche 1 bis 5,
**dadurch gekennzeichnet,**
**dass** die Frequenz der ersten Sendeeinheit (31) so gewählt ist, dass das Feld in der Passierzone (21) als Nahfeld ausgebildet ist.

7. Verfahren nach einem der Ansprüche 1 bis 6,
**dadurch gekennzeichnet,**
**dass** die Frequenz des Sendemoduls (12) so gewählt ist, dass das Feld in der Erfassungszone (22) als Fernfeld ausgebildet ist.

8. Verfahren nach Anspruch 6 oder 7,
**dadurch gekennzeichnet,**
**dass** im Verfahrenschritt B die zweite Informationseinheit (INF2) von der ersten Sendeeinheit (31) ausgesendet wird.

9. Verfahren nach einem der Ansprüche 1 bis 7,
**dadurch gekennzeichnet,**
**dass** im Verfahrensschritt C die dritte Informationseinheit (INF3) nach einer zufällig bestimmten Zeitdauer (t_{RAND}) nach dem Empfang der ersten Informationseinheit (INF1) ausgesendet wird.

10. Verfahren nach Anspruch 9,
**dadurch gekennzeichnet,**
**dass** die dritte Informationseinheit (INF3) mehrfach ausgesendet wird.

11. Verfahren nach einem der Ansprüche 1 bis 10,
**dadurch gekennzeichnet,**
**dass** dem Verfahrensschritt C ein Verfahrensschritt C1 anschliesst, in dem aufgrund einer von der zweiten Sende-/Empfangseinheit (32) empfangenen dritten Informationseinheit (INF3) eine zweite Inforznationseinheit (INF2) ausgesendet wird, um auf dem Billett (10) die Anwesenheitsinformation (INFA) als abgebucht zu kennzeichnen.

12. Verfahren nach einem der Ansprüche 1 bis 11,
**dadurch gekennzeichnet,**
**dass** im Verfahrensschritt B in der zweiten Informationseinheit (INF2) eine Information (APPLICATION2) enthalten ist, die auf einem auf dem Billett (10) befindlichen Anzeigemodul anzeigbar ist.

13. Verfahren nach einem der Ansprüche 3 bis 12,
**dadurch gekennzeichnet,**
**dass** im Verfahrensschritt B das zweite Sende-/Empfangsmodul (12) mit einer in der zweiten Informationseinheit (INF2) als Zykluszeit (t_{CYCL}) enthaltenen Information (CYCLE2) periodisch aktiv geschaltet wird.

## Claims

1. Method for registering tickets (10) to establish a service to be purchased and/or a defined presence, with the tickets (10) comprising a processor module (16), a storage module (17) and at least one first receiver module (11) and a second transceiver module (12) and with at least one first transmitter unit (31) and a second transceiver unit (32) being provided in a detection zone (21, 22) for communication with tickets (10) and the detection zone (22) being assigned at least one crossing zone (21), by means of which the detection zone (22) can be entered and left,
**characterised in that**
the registration forming a basis for establishing the purchased service and/or defined presence contains the following method steps:
A tickets (10) reaching the detection zone (22) through the crossing zone (21) receive a first information unit (INF1) from the first transmitter unit (31) by way of the first receiver module (11), said information unit (INF1) containing an identity assigned to the detection zone (22) which is stored on the ticket following receipt;
B tickets (10) located in the detection zone (22) at at least one subsequent point in time, which is determined by the defined presence or by the purchase of the service, receive a second information unit (INF2) which contains the identity assigned to the detection zone (22) and which, on agreement with the identity stored on the ticket (10) in method step A, is stored as presence information (INFA);
C tickets (10) leaving the detection zone (22) through the crossing zone (21) receive a further first information unit (INF1) and as a result of presence information (INFA) stored in method step B, a third information unit (INF3) containing the presence information (INFA) and the identity of the ticket (10) is transmitted to the second transceiver unit (32) and is registered at least once as a ticket record (TICK_REC).

2. Method according to claim 1,
**characterised in that**
the first information unit (INF1) transmitted in method step A contains an item of information (CYCLE1), by means of which the second transceiver module (12) is intermittently switched to active in respect of the receipt.

3. Method according to claim 2,
**characterised in that**
the second transceiver module (12) is periodically switched to active with an item of information contained in the first information unit (INF1) as a cycle time (T*_{CYCLE}*).

4. Method according to one of claims 1 to 3,
**characterised in that**
an item of information (COMMAND2) is contained in the second information unit (INF2) received in the method step B, said item of information (COMMAND2) deactivating the second transceiver module (12) located on the ticket (10) following storage of the presence information (INFA).

5. Method according to one of claims 1 to 4,
**characterised in that**
in method step B, the second information unit (INF2) is transmitted by the second transceiver unit (32).

6. Method according to one of claims 1 to 5,
**characterised in that**
the frequency of the first transmitter unit (31) is selected such that the field in the crossing zone (21) is embodied as a near field.

7. Method according to one of claims 1 to 6,
**characterised in that**
the frequency of the transmitter module (12) is selected such that the field in the detection zone (22) is embodied as a far field.

8. Method according to claim 6 or 7,
**characterised in that**
in method step B, the second information unit (INF2) is transmitted by the first transmitter unit (31).

9. Method according to one of claims 1 to 7,
**characterised in that**
in method step C, the third information unit (INF3) is transmitted after a randomly defined period of time (t*_{RAND}*) following receipt of the first information unit (INF1).

10. Method according to claim 9,
**characterised in that**
the third information unit (INF3) is transmitted a number of times.

11. Method according to one of claims 1 to 10,
**characterised in that**
method step C is followed by method step C1, in which a second information unit (INF2) is transmitted as a result of a third information unit (INF3) received by the second transceiver unit (32) in order to identify the presence information (INFA) on the ticket (10) as booked.

12. Method according to one of claims 1 to 11,
**characterised in that**
in method step B, the second information unit (INF2) contains an item of information (APPLICATION 2), which can be displayed on a display module located on the ticket (10).

13. Method according to one of claims 3 to 12,
**characterised in that**
in method step B, the second transceiver module (12) is periodically switched to active with an item of information (CYCLE2) contained in the second information unit (INF2) as cycle time (t*_{CYCLE}*).

## Revendications

1. Procédé d'enregistrement de billets (10) pour la constatation d'une prestation à fournir et/ou d'une présence définie, selon lequel les billets (10) ont un module de processeur (16), un module de mémoire (17) et au moins un premier module de réception (11) et un deuxième module d'émission/réception (12), et selon lequel au moins une première unité d'émission (31) et une deuxième unité d'émission/réception (32) sont prévues dans une zone de détection (21, 22) pour la communication avec des billets (10) et à la zone de détection (22) est associée une zone de passage (21), par laquelle on peut entrer dans la zone de détection (22) et la quitter,
**caractérisé en ce que**
l'enregistrement, qui est à la base de la constatation de la prestation fournie et/ou de la présence définie, comprend des étapes de procédé suivantes :
A Les billets (10) parvenant dans la zone de détection (22) par la zone de passage (21) reçoivent de la première unité d'émission (31), par le biais du premier module de réception (11), une première unité d'information (INF1), dans laquelle est contenue une identité associée à la zone de détection (22) et qui, après réception, est mémorisée sur le billet ;
B A au moins un instant ultérieur, qui est déterminé par la présence définie ou par l'accomplissement de la prestation, les billets (10) se trouvant dans la zone de détection (22) reçoivent une deuxième unité d'information (INF2), qui contient l'identité associée à la zone de détection (22) et qui, si elle correspond à l'identité mémorisée à l'étape de procédé A, est mémorisée sur le billet (10) en tant qu'information de présence (INFA) ;
C Les billets (10) quittant la zone de détection (22) par la zone de passage (21) reçoivent une première unité d'information (INF1) supplémentaire et, sur la base de l'information de présence (INFA) mémorisée à l'étape de procédé B, une troisième unité d'information (INF3), provenant du deuxième module d'émission/réception (12) et contenant l'information de présence (INFA) et l'identité du billet (10), est transmise à la deuxième unité d'émission/réception (32) et enregistrée au moins une fois en tant qu'enregistrement de billet (TICK_REC).

2. Procédé selon la revendication 1,
**caractérisé en ce que**
la première unité d'information (INF1) transmise lors de l'étape de procédé A contient une information (CYCLE1), à la réception de laquelle le deuxième module d'émission/réception (12) est mis à l'état actif de manière intermittente.

3. Procédé selon la revendication 2,
**caractérisé en ce que**
le deuxième module d'émission/réception (12) est mis à l'état actif de manière périodique par une information contenue dans la première unité d'information (INF1) en tant que temps de cycle (t_{CYCL}).

4. Procédé selon l'une des revendications 1 à 3,
**caractérisé en ce que**
la deuxième unité d'information (INF2) reçue à l'étape de procédé B contient une information (COMMAND2) qui, une fois la mise en mémoire de l'information de présence (INFA) effectuée, désactive le deuxième module d'émission/réception (12) se trouvant sur le billet (10).

5. Procédé selon l'une des revendications 1 à 4,
**caractérisé en ce qu'**
à l'étape de procédé B, la deuxième unité d'information (INF2) est émise par la deuxième unité d'émission/réception (32).

6. Procédé selon l'une des revendications 1 à 5,
**caractérisé en ce que**
la fréquence de la première unité d'émission (31) est choisie de manière que le champ dans la zone de passage (21) soit réalisé en champ proche.

7. Procédé selon l'une des revendications 1 à 6,
**caractérisé en ce que**
la fréquence du module d'émission (12) est choisie de manière que le champ dans la zone de détection (22) soit réalisé en champ éloigné.

8. Procédé selon la revendication 6 ou 7,
**caractérisé en ce qu'**
à l'étape de procédé B, la deuxième unité d'information (INF2) est émise par la première unité d'émission (31).

9. Procédé selon l'une des revendications 1 à 7,
**caractérisé en ce qu'**
à l'étape de procédé C, la troisième unité d'information (INF3) est émise après une durée (t_{RAND}) déterminée de façon aléatoire après la réception de la première unité d'information (INF1).

10. Procédé selon la revendication 9,
**caractérisé en ce que**
la troisième unité d'information (INF3) est émise plusieurs fois.

11. Procédé selon l'une des revendications 1 à 10,
**caractérisé en ce qu'**
à l'étape de procédé C s'ajoute une étape de procédé C1, dans laquelle une deuxième unité d'information (INF2) est émise sur la base d'une troisième unité d'information (INF3) reçue par la deuxième unité d'émission/réception (32), pour caractériser l'information de présence (INFA) comme étant validée sur le billet (10).

12. Procédé selon l'une des revendications 1 à 11,
**caractérisé en ce qu'**
à l'étape de procédé B, la deuxième unité d'information (INF2) contient une information (APPLICATION2) qui peut être affichée sur un module d'affichage se trouvant sur le billet (10).

13. Procédé selon l'une des revendications 3 à 12,
**caractérisé en ce qu'**
à l'étape de procédé B, le deuxième module d'émission/réception (12) est mis à l'état actif de manière périodique par une information (CYCLE2) contenue dans la deuxième unité d'information (INF2) en tant que temps de cycle (t_{CYCL}).
